# EUROPEAN PATENT SPECIFICATION

(11) **EP 1 042 622 B1**
(45) Date of publication and mention of the grant of the patent: **27.02.2002**
(21) Application number: 97954231.3
(22) Date of filing: 23.12.1997
(51) Int. Cl.: F16H 7/02

(54) **SYNCHRONOUS DRIVE BELT/PULLEY COMBINATION**
SYNCHRONTREIBRIEMEN/RIEMENSCHEIBEN-KOMBINATION
COUPLAGE COURROIE/POULIE DE TRANSMISSION SYNCHRONE

(43) Date of publication of application: 11.10.2000
(73) Proprietor: The Goodyear Tire & Rubber Company, Akron, Ohio 44316-0001 (US)
(72) Inventor: FEUERBORN, Frank, Joseph, Lincoln, NE 68502 (US)
(74) Representative: Leitz, Paul
(86) International application number: US9723869
(87) International publication number: WO9932802

(56) References cited:
- US-A- 3 338 107
- US-A- 3 575 474
- US-A- 5 209 705
- US-A- 5 704 861

## Description

### Field

This invention relates to synchronous drive belts in combination with synchronous drive pulleys wherein the complementary teeth of the belt and cavities of the pulleys are such as to make the combination self-tracking.

### Background

Heretofore, synchronous drive systems are known to combine a toothed belt and a toothed pulley where the teeth run perpendicular to the longitudinal direction necessitating the use of flanges on the pulley or the belt to provide the tracking so that the combination remained meshed. More recently, various arrangements have been shown where the respective belt teeth and pulley cavities are oriented at angles in arrangements which are other than perpendicular. See e.g. U.S. Patent No. 5,209,705, which discloses the features of the preamble of claim 1, and the art cited therein. These arrangements allow for self-tracking of the belt/pulley combinations without the need for flanges on either the belt or the pulley. To that end, however, belt widths have remained less than or equal to the widths of the pulleys, subjecting the belts to tooth shear forces and tensile failures of the cords and cracking at the belt edges, and at the same time limiting the transmittable cower per unit width of the sprocket.

U.S. Patent No. 3,575,474 discloses a positive drive system for an endless track. The belt has a width greater than the drive wheel that pulls the belt along, in combination with an idle wheel.

### Summary of the Invention

In order to relieve tooth shear stresses and to increase the transmittable power per unit width of the sprocket, the present invention provides a combination of a self-tracking synchronous drive belt having lateral edges and an externally flangeless pulley having a width wherein the belt edges overhang the pulley. Such an arrangement allows for the full utilization of the full width of the pulley.

### Brief Description of the Drawings

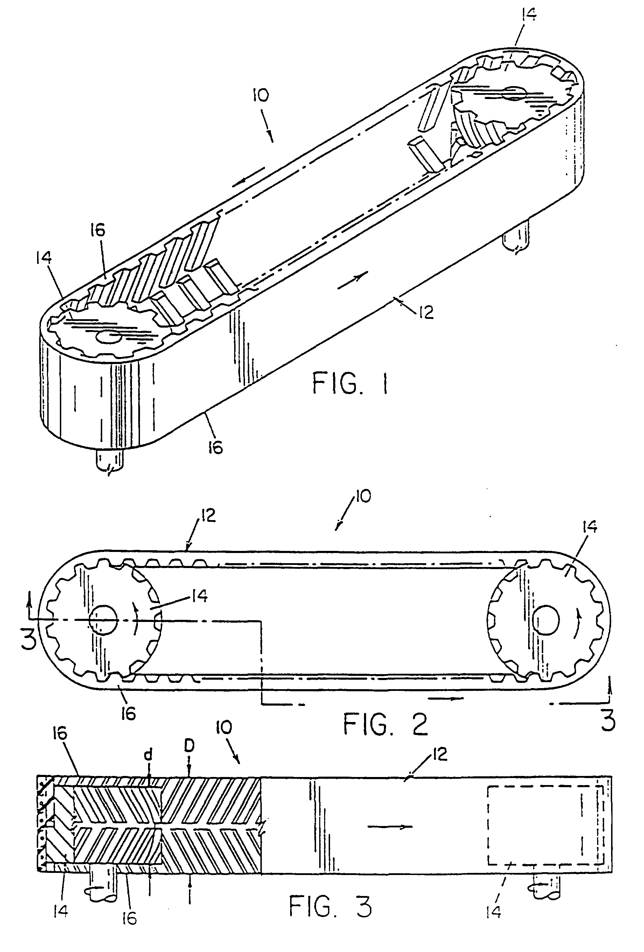

FIG. 1 is a perspective view of the belt/pulley combination of the present invention.
FIG. 2 is a side elevational view of the combination.
FIG. 3 is a sectional view of the combination taken along line 3-3 of FIG. 2 with parts broken away.

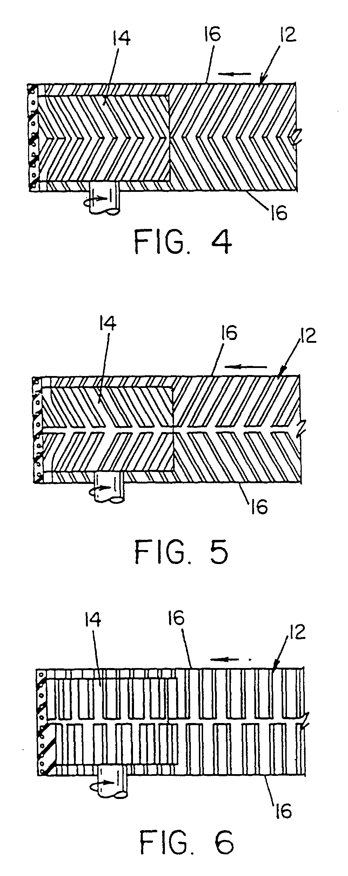

FIGS. 4-6 illustrate other typical tooth and cavity patterns of self-tracking belt/pulley combinations.

### Description of the Invention

A belt/pulley combination, shown generally at 10, is comprised of a belt 12 and a pulley 14 wherein the belt teeth and the pulley cavities are complementary to each other in such a fashion as to make a self-tracking combination. The belt has two lateral edges 16 to define between them a belt width D. The pulley has a width d. The belt width D is made to be 101% to 200% the pulley width d. This combination allows for the use of a flangeless pulley, thus, reducing the weight while at the same time reducing the likelihood of shearing of the belt teeth due to the overhang.

While certain representative embodiments and details have been shown for the purpose of illustrating the invention, it will be apparent to those skilled in this art that various changes and modifications may be made therein without departing from the scope of the invention.

## Claims

1. A combination (10) of a self-tracking synchronous toothed drive belt (12) having lateral edges (16) and an externally flangeless pulley (14) having cavities, where the belt teeth and pulley cavities are oriented at opposite angles to the longitudinal direction of the belt and are complementary to each other, the combination being **characterized by** the drive belt (12) having a width between said lateral edges (16) which is from 101% to 200% the width of the pulley (14).

## Patentansprüche

1. Kombination (10) aus einem selbstführenden Synchronantriebszahnriemen (12), der Seitenränder (16) aufweist, und einer außen flanschlosen Riemenscheibe (14), die Hohlräume aufweist, wobei die Riemenzähne und die Riemenscheibenhohlräume unter entgegengesetzten Winkeln zur Längsrichtung des Riemens orientiert sind und sich gegenseitig ergänzen, wobei die Kombination **dadurch gekennzeichnet ist, daß** der Antriebsriemen (12) eine Breite zwischen den Seitenrändern (16) aufweist, die zwischen 101 % und 200 % der Breite der Riemenscheibe (14) beträgt.

## Revendications

1. Combinaison (10) d'une courroie de transmission dentée (12) du type à autoalignement et possédant des bords latéraux (16) et d'une poulie (14) exempte de bords externes comportant des cavités, dans laquelle les dents de la courroie et les cavités de la poulie sont orientées en formant des angles opposés par rapport à la direction longitudinale de la courroie et sont mutuellement complémentaires, la combinaison étant **caractérisée par le fait que** la courroie de transmission (12) possède une largeur entre lesdits bords latéraux (26) qui représente de 101 % à 200 % de la largeur de la poulie (14).
